(19) Europäisches Patentamt
European Patent Office
Office européen des brevets

(11) **EP 1 655 470 B1**

(12) **FASCICULE DE BREVET EUROPEEN**

(45) Date de publication et mention
de la délivrance du brevet:
**01.07.2015   Bulletin 2015/27**

(51) Int Cl.:
***F02D 35/02*** *(2006.01)*      ***G01M 15/08*** *(2006.01)*

(21) Numéro de dépôt: **05300848.8**

(22) Date de dépôt: **24.10.2005**

(54) **Dispositif et procédé d'estimation en temps réel de l'angle de début de combustion d'un moteur à combustion interne**

Vorrichtung und Verfahren zum Echtzeitbestimmen des Winkelbeginns einer Verbrennung eines Verbrennungsmotors

Device and method for estimating in real time the start angle of combustion of an internal combustion engine

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **09.11.2004   FR 0411936**

(43) Date de publication de la demande:
**10.05.2006   Bulletin 2006/19**

(73) Titulaire: **Renault s.a.s.**
**92109 Boulogne Billancourt (FR)**

(72) Inventeurs:
• **Leminoux, Gérald**
**78980, LONGNES (FR)**
• **Emery, Pascal**
**92400, COURBEVOIE (FR)**
• **Navarro, Marcos**
**75014, PARIS (FR)**

(56) Documents cités:
**US-A- 4 406 265      US-A- 4 567 751**
**US-A- 4 928 653      US-A- 4 936 137**
**US-A- 5 642 713      US-A1- 2003 010 101**

**Description**

L'invention concerne les moteurs rotatifs à combustion interne (essence ou diesel) à injection directe ou indirecte de carburant, et plus particulièrement l'estimation du début de combustion dans un tel moteur.

Les normes européennes anti-pollution deviennent de plus en plus sévères sur les moteurs d'automobiles. Il est important pour les constructeurs automobiles de réduire les émissions polluantes de leurs moteurs sans négliger leur consommation en carburant et leur performance. Or, la phase prépondérante du cycle 4 temps sur ces émissions est la phase de combustion. Il est donc important de bien connaître cette phase et ses caractéristiques.

L'une de ces caractéristiques est l'instant au début de la combustion. Il s'agit d'un paramètre important influant sur le rendement du cycle thermodynamique, et donc sur le couple. Ce paramètre agit aussi sur le rendement de combustion.

Actuellement, le début de combustion est rarement estimé en ligne sur un moteur implanté dans un véhicule. Lorsque cette détection est effectuée, elle l'est en utilisant des méthodes numériques basées sur des principes thermodynamiques ou de traitement numérique du signal. La demande de brevet américain n°-2003/145829 illustre de telles méthodes numériques. Or, ces méthodes, gourmandes en temps de calcul, sont difficilement implantables sur les calculateurs de contrôle moteur actuels.

Il a également été envisagé de détecter le début de combustion à l'aide d'un accéléromètre, comme décrit par exemple dans la demande de brevet européen n° 1 092 968

Le brevet américain n° 4 567 751 décrit un dispositif de détection de cognement dans un moteur diesel utilisant une vitesse de changement de la pression de combustion.

La demande de brevet US 2003/010101 décrit un procédé et un dispositif de détermination numérique des instants de début de combustion d'un moteur à combustion interne à partir notamment de mesures de pression cylindre.

Le brevet US 4 928 653 décrit un dispositif d'optimisation du rapport air/carburant alimentant un moteur à combustion. En particulier, le dispositif mesure la pression cylindre et l'angle de vilebrequin pour déterminer une grandeur qui est comparée à une valeur cible afin d'ajuster le rapport air/carburant alimentant le moteur.

L'invention vise à apporter une solution radicalement différente pour estimer l'angle du début de combustion d'un moteur essence ou diesel.

Ainsi, selon un mode de mise en oeuvre de l'invention, il est proposé d'estimer en temps réel le début de combustion dans les voitures diesel ou essence en se basant sur le signal de dérivé de pression cylindre.

L'invention est telle que définie dans les revendications.

Selon un mode de réalisation de l'invention, il est proposé un dispositif analogique d'estimation en temps réel de l'angle de début de combustion d'un moteur, ce dispositif comprenant une entrée pour recevoir un signal de pression cylindre et un circuit analogique d'estimation apte à délivrer un signal représentatif des instants de début de combustion, à partir d'un signal représentatif de la dérivée temporelle du signal de pression cylindre.

Le signal représentatif des instants de début de combustion est avantageusement un signal logique périodique de période égale au cycle thermodynamique.

Selon un mode de réalisation de l'invention, le circuit analogique d'estimation comporte un étage dérivateur relié à ladite entrée et dérivant ledit signal de dérivée. Le circuit comporte également des moyens analogiques de traitement aptes à détecter les crêtes d'un signal haute fréquence issu du signal de dérivée.

La première crête indique l'instant de début de combustion.

Ces moyens analogiques de traitement comportent avantageusement un étage de filtrage passe-bande relié à l'étage dérivateur pour délivrer ledit signal haute fréquence, un étage amplificateur relié à la sortie de l'étage de filtrage, et un étage de détection de crêtes relié à la sortie de l'étage amplificateur.

Les moyens analogiques de traitement peuvent comporter avantageusement un étage de comparaison à deux seuils, relié à la sortie du détecteur de crêtes, pour délivrer le signal logique périodique représentatif des instants de début de combustion.

Selon un mode de mise en oeuvre de l'invention, il est également proposé un procédé d'estimation en temps réel de l'angle de début de combustion d'un moteur, comprenant une élaboration à partir d'un signal représentatif de la dérivée temporelle d'un signal de pression cylindre, d'un signal représentatif des instants de combustion.

Cette élaboration comporte avantageusement une détection des crêtes d'un signal haute fréquence issu du signal de dérivée.

Selon un mode de mise en oeuvre, ladite élaboration comporte un filtrage passe-bande du signal de dérivée pour délivrer ledit signal haute fréquence, une amplification du signal filtré et une détection des crêtes du signal amplifié.

Le signal représentatif de l'instant de début de combustion est un signal périodique de période égale au cycle thermodynamique ; ladite élaboration comporte avantageusement une comparaison à deux seuils du signal de crête, de façon à délivrer ledit signal périodique.

D'autres avantages et caractéristiques de l'invention apparaîtront à l'examen de la description détaillée de mode de mise en oeuvre et de réalisation, nullement limitatifs et des dessins annexés sur lesquels :

- La figure 1 illustre schématiquement une partie d'un moteur à combustion interne équipé d'un dispositif selon un mode de réalisation de l'invention,
- La figure 2 illustre plus en détail un mode de réalisation d'un dispositif selon l'invention,
- La figure 3 illustre un exemple de caractéristique d'un comparateur à deux seuils incorporé dans un dispositif selon un mode de réalisation de l'invention, et,
- La figure 4 illustre schématiquement les principales étapes d'un mode de mise en oeuvre du procédé selon l'invention.

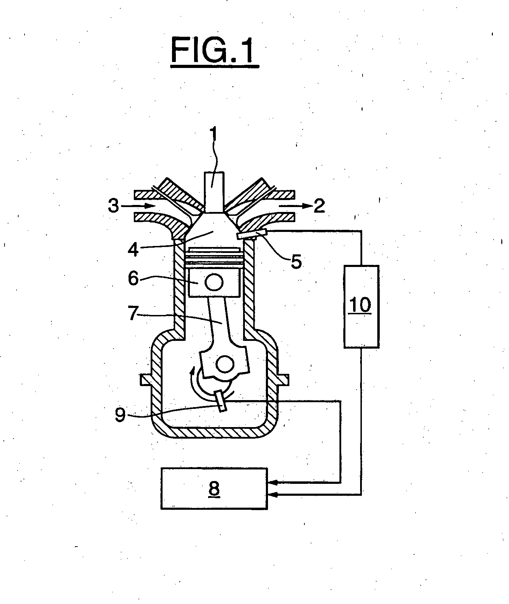

Sur la figure 1, on a représenté schématiquement en coupe un cylindre moteur équipé d'une bielle 7, d'un piston 6 définissant, avec la partie supérieure du cylindre, une chambre de combustion 4.

Cette chambre de combustion communique avec une zone d'admission 3, une zone d'échappement 2. Par ailleurs, un injecteur ou une bougie 1 débouche également dans cette chambre de combustion.

Un capteur d'angle vilebrequin 9 délivre des informations à un boîtier électronique de contrôle moteur 8.

Par ailleurs, selon un mode de réalisation de l'invention, il est prévu un capteur de pression cylindre 5 relié à un circuit analogique 10 d'estimation de l'angle de début de combustion (SOC). Ce circuit analogique d'estimation 10 a sa sortie reliée au boîtier électronique de contrôle 8.

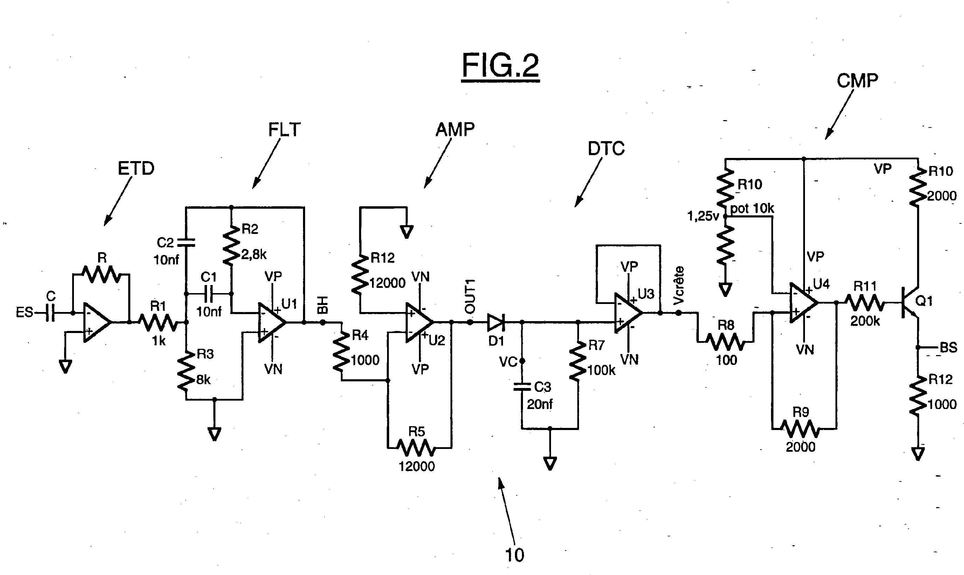

Comme illustré sur la figure 2, le circuit analogique 10 comporte une borne d'entrée ES reliée au capteur de pression et destinée à recevoir une tension représentative de la pression dans la chambre de combustion du cylindre.

Le circuit 10 comporte en tête un étage dérivateur ETD formé ici classiquement d'un intégrateur dont le gain est réglé par le produit RC. La tension de sortie de l'étage ETD est proportionnelle (dans le rapport de proportionnalité RC) à la dérivée temporelle de la tension d'entrée, c'est-à-dire à la dérivée temporelle du signal de pression cylindre.

L'étage dérivateur ETD est suivi dans ce mode de réalisation, d'un étage de filtrage passe-bande FLT qui effectue un filtrage de la dérivée de pression pour en extraire un signal haute fréquence, par exemple à 10khz, qui apparaît au moment de la combustion. La fonction de transfert de ce filtre passe-bande est par exemple la suivante :

$$tf(s) = \frac{2{,}489 \ 10^{-5} \ s}{2{,}489 \ 10^{-10}s^2 + 1{,}778 \ 10^{-5} \ s + 1}$$

Cet étage de filtrage passe-bande est suivi avantageusement d'un étage amplificateur AMP qui amplifie le signal émanant du filtre FLT. Le gain de cet amplificateur est donné par le rapport - R5/R4.

L'étape amplificateur AMP est suivie d'un comparateur DTC dont le montage comporte deux parties, à savoir une première partie formant un détecteur de crêtes et composée de la diode D1, du condensateur C3 et de la résistance R7.

La deuxième partie du montage est composée de l'amplificateur Q3 monté en suiveur et qui permet de réaliser une adaptation d'impédance rendant le fonctionnement du détecteur de crêtes indépendant de la charge engendrée par l'utilisation.

En fonctionnement, lorsque la tension Outl à l'entrée du détecteur de crêtes est supérieure à la somme de la tension aux bornes du condensateur C3 et de la tension de seuil de la diode D1, alors la tension aux bornes du condensateur C3 est égale à la différence entre la tension Outl et la tension de seuil de la diode.

Par contre, lorsque la tension Outl est inférieure à la somme de la tension aux bornes du condensateur C3 et de la tension de seuil de la diode, alors la diode se bloque et le condensateur C3 se décharge à travers la résistance R7 avec une constante de temps égale à C3*R7.

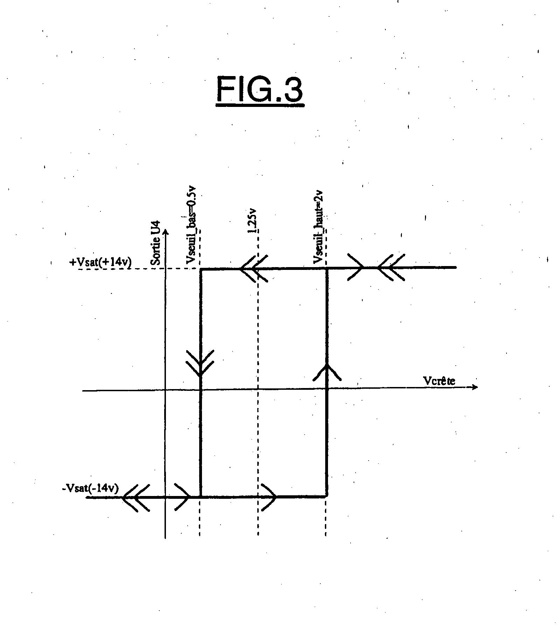

Le dernier élément du circuit analogique 10, dans ce mode de réalisation, est un comparateur à deux seuils CMP de type déclencheur (trigger) non-inverseur dont la caractéristique est illustrée sur la figure 3.

Le seuil haut est choisi égal à 0,5V tandis que le seuil bas est choisi égal à 2V.

Si l'on considère que la résistance R9 est très grande devant la résistance R8 (par exemple R9 = 2 kΩ et R8 = 100 Ω) alors le seuil bas est sensiblement égal à 1,25 + Vsat*R8/R9 tandis que le seuil haut est sensiblement égal à 1,25 - Vsat*R8/R9.

L'adaptation est utilisée avec le transistor Q1 à l'aide d'un montage de type commutation.

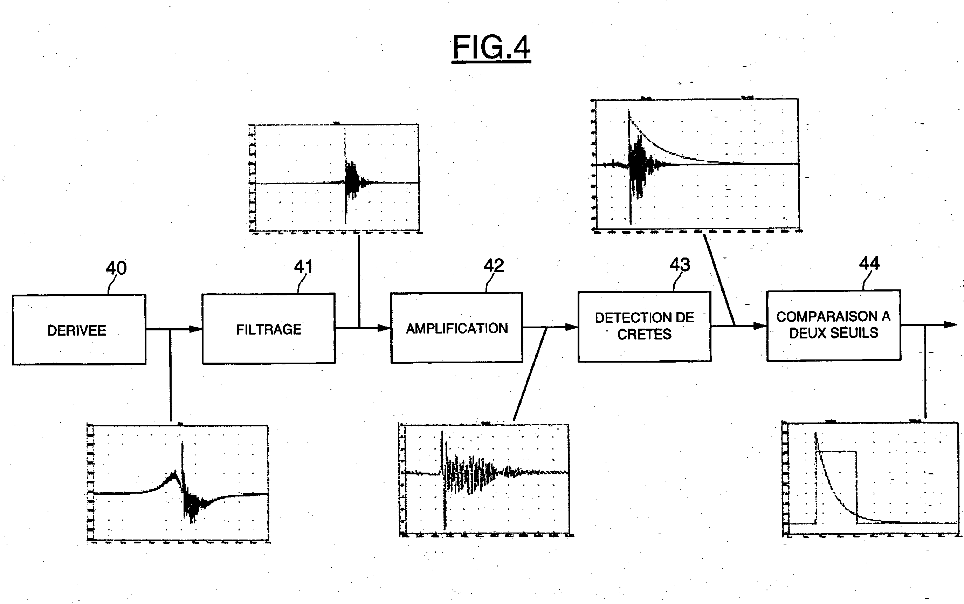

La figure 4 résume les principales étapes d'un mode de mise en oeuvre de l'invention, et résume également le fonctionnement du mode de réalisation du dispositif illustré sur la figure 2.

Après une étape 40 de dérivée du signal de pression cylindre, on extrait dans l'étape 41 les hautes fréquences du signal de dérivée de pression. Cette extraction peut être effectuée par exemple par l'étage de filtrage SLT.

Puis, dans l'étape 42, on amplifie le signal issu du filtrage 41.

L'étape suivante 43 est la détection des crêtes du signal amplifié. Cette étape permet de transformer un signal haute fréquence en un signal base fréquence qui va permettre de détecter la présence de hautes fréquences. Le détecteur de crêtes a pour but de mémoriser le passage d'une tension faible à une tension plus importante.

Enfin, la dernière étape 44 est une comparaison de ces crêtes par rapport à deux seuils. Plus précisément, on génère un signal créneau 0V-5V lorsque les crêtes de la partie du signal à 10khz de la dérivée de pression ont été détectées par la détection de crête 43.

Ainsi, l'invention estime en temps réel le début de combustion dans les moteurs diesel ou essence. Elle est basée sur le signal de dérivée de pression de cylindre et le dispositif correspondant est placé entre le capteur de pression de cylindre et le boîtier électronique de contrôle moteur.

Le dispositif selon un mode de réalisation de l'invention génère à partir du signal de dérivée de pression un signal créneau entre 0V et 5Vde période égale au cycle thermodynamique. Les fronts montants de ce signal correspondent aux instants successifs de début de combustion.

## Revendications

1. Dispositif analogique d'estimation en temps réel de l'angle de début de combustion d'un moteur, comprenant une entrée pour recevoir un signal de pression cylindre et un circuit d'estimation (10) apte à délivrer, à partir d'un signal représentatif de la dérivée temporelle du signal de pression cylindre, un signal représentatif des instants de début de combustion, **caractérisé en ce que** le circuit d'estimation est un circuit analogique, et **en ce que** le signal représentatif des instants de début de combustion est un signal créneau entre 0V et 5V périodique et de période égale au cycle thermodynamique, les fronts montants de ce signal correspondant aux instants successifs de début de combustion.

2. Dispositif selon la revendication 1, **caractérisé par le fait que** le circuit analogique d'estimation comporte un étage dérivateur (ETD) relié à ladite entrée et délivrant ledit signal de dérivée, et des moyens analogiques de traitement aptes à détecter les crêtes d'un signal haute fréquence issu du signal de dérivée.

3. Dispositif selon la revendication 2, **caractérisé par le fait que** les moyens analogiques de traitement comportent un étage de filtrage passe-bande (FLT) relié à l'étage dérivateur pour délivrer ledit signal haute fréquence, un étage amplificateur (AMP) relié à la sortie de l'étage de filtrage, et un étage de détection de crêtes (DTC) relié à la sortie de l'étage amplificateur.

4. Dispositif selon la revendication 3, **caractérisé par le fait que** les moyens analogiques de traitement comportent un étage de comparaison à deux seuils (CMP) relié à la sortie du détecteur de crêtes, pour délivrer ledit signal logique.

5. Procédé d'estimation en temps réel de l'angle de début de combustion d'un moteur, comprenant une élaboration (40-44) à partir d'un signal représentatif de la dérivée temporelle d'un signal de pression cylindre, d'un signal représentatif des instants de début de combustion, **caractérisé en ce que** l'élaboration est une élaboration analogique et **en ce que** le signal représentatif des instants de début de combustion est un signal créneau entre 0V et 5V périodique et de période égale au cycle thermodynamique, les fronts montants de ce signal correspondant aux instants successifs de début de combustion.

6. Procédé selon la revendication 5, **caractérisé par le fait que** ladite élaboration comporte une détection des crêtes d'un signal haute fréquence issu du signal de dérivée.

7. Procédé selon la revendication 6, **caractérisé par le fait que** ladite élaboration comporte un filtrage passe-bande (41) du signal de dérivée pour délivrer ledit signal haute fréquence, une amplification du signal filtré (42), et une détection des crêtes (43) du signal amplifié.

8. Procédé selon la revendication 7, **caractérisé par le fait que** ladite élaboration comporte une comparaison à deux seuils (44) du signal de crêtes, de façon à délivrer ledit signal logique.

## Patentansprüche

1. Analoge Vorrichtung zur Echtzeitschätzung des Verbrennungsbeginnwinkels eines Motors, die einen Eingang zum Empfang eines Zylinderdrucksignals und einen Schätzkreis (10) enthält, der ausgehend von einem für die zeitliche Ableitung des Zylinderdrucksignals repräsentativen Signals ein für die Verbrennungsbeginnzeitpunkte repräsentatives Signal liefern kann, **dadurch gekennzeichnet, dass** der Schätzkreis ein analoger Kreis ist, und dass das für die Verbrennungsbeginnzeitpunkte repräsentative Signal ein periodisches Rechtecksignal zwischen 0V und 5V und mit einer Periode gleich dem thermodynamischen Zyklus ist, wobei die Anstiegsflanken dieses Signals den aufeinanderfolgenden Zeitpunkten des Verbrennungsbeginns entsprechen.

2. Vorrichtung nach Anspruch 1, **dadurch gekennzeichnet, dass** der analoge Schätzkreis eine Differenzierstufe (ETD), die mit dem Eingang verbunden ist und das Ableitungssignal liefert, und analoge Verarbeitungseinrichtungen aufweist, die die Spitzen eines vom Ableitungssignal stammenden Hochfrequenzsignals erfassen können.

3. Vorrichtung nach Anspruch 2, **dadurch gekennzeichnet, dass** die analogen Verarbeitungseinrichtungen eine Tiefpassfilterstufe (FLT), die mit der Differenzierstufe verbunden ist, um das Hochfrequenzsignal zu liefern, eine Verstärkungsstufe (AMP), die mit dem Ausgang der Filterstufe verbunden ist, und eine Spitzenerfassungsstufe (DTC) aufweisen, die mit dem Ausgang der Verstärkungsstufe verbunden ist.

4. Vorrichtung nach Anspruch 3, **dadurch gekennzeichnet, dass** die analogen Verarbeitungseinrichtungen eine Vergleichsstufe mit zwei Schwellen (CMP) aufweisen, die mit dem Ausgang des Spitzendetektors verbunden ist, um das logische Signal zu liefern.

5. Verfahren zur Echtzeitschätzung des Verbrennungsbeginnwinkels eines Motors, das eine Erarbeitung (40-44), ausgehend von einem für die zeitliche Ableitung eines Zylinderdrucksignals repräsentativen Signals, eines für Verbrennungsbeginnzeitpunkte repräsentativen Signals aufweist, **dadurch gekennzeichnet, dass** die Erarbeitung eine analoge Erarbeitung ist, und dass das für die Verbrennungsbeginnzeitpunkte repräsentative Signal ein periodisches Rechtecksignal zwischen 0V und 5V und mit einer Periode gleich dem thermodynamischen Zyklus ist, wobei die Anstiegsflanken dieses Signals den aufeinanderfolgenden Zeitpunkten des Verbrennungsbeginns entsprechen.

6. Verfahren nach Anspruch 5, **dadurch gekennzeichnet, dass** die Erarbeitung eine Erfassung der Spitzen eines vom Ableitungssignal stammenden Hochfrequenzsignals aufweist.

7. Verfahren nach Anspruch 6, **dadurch gekennzeichnet, dass** die Erarbeitung eine Tiefpassfilterung (41) des Ableitungssignals, um das Hochfrequenzsignal zu liefern, eine Verstärkung des gefilterten Signals (42) und eine Erfassung der Spitzen (43) des verstärkten Signals aufweist.

8. Verfahren nach Anspruch 7, **dadurch gekennzeichnet, dass** die Erarbeitung einen Vergleich mit zwei Schwellen (4) des Spitzensignals aufweist, um das logische Signal zu liefern.

**Claims**

1. Analogue device for estimating in real time the start angle of combustion of an engine, comprising an input for receiving a cylinder pressure signal and an estimation circuit (10) suitable for delivery, from a signal representative of the time derivative of the cylinder pressure signal, a signal representative of the combustion start instants, **characterized in that** the estimation circuit is an analogue circuit, and **in that** the signal representative of the combustion start instants is a pulsed signal between 0 V and 5 V that is periodic and of a period equal to the thermodynamic cycle, the rising edges of this signal corresponding to the successive combustion start instants.

2. Device according to Claim 1, **characterized in that** the analogue estimation circuit comprises a derivative stage (ETD) linked to said input and delivering said derivative signal, and analogue processing means suitable for detecting the peaks of a high-frequency signal from the derivative signal.

3. Device according to Claim 2, **characterized in that** the analogue processing means comprise a bandpass filtering stage (FLT) linked to the derivative stage to deliver said high-frequency signal, an amplifier stage (AMP) linked to the output of the filtering stage, and a peak detection stage (DTC) linked to the output of the amplifier stage.

4. Device according to Claim 3, **characterized in that** the analogue processing means comprise a two-threshold comparison stage (CMP) linked to the output of the peak detector, to deliver said logic signal.

5. Method for estimating in real time the start angle of combustion of an engine, comprising a generation (40-44) from a signal representative of the time derivative of a cylinder pressure signal, of a signal representative of the combustion start instants, **characterized in that** the generation is an analogue generation and **in that** the signal representative of the combustion start instants is a pulsed signal between 0 V and 5 V that is periodic and of a period equal to the thermodynamic cycle, the rising edges of this signal corresponding to the successive combustion start instants.

6. Method according to Claim 5, **characterized in that** said generation comprises a detection of the peaks of a high-frequency signal derived from the derivative signal.

7. Method according to Claim 6, **characterized in that** said generation comprises a bandpass filtering (41) of the derivative signal to deliver said high-frequency signal, an amplification of the filtered signal (42), and a detection of the peaks (43) of the amplified signal.

8. Method according to Claim 7, **characterized in that** said generation comprises a two-threshold comparison (44) of the peak signal, so as to deliver said logic signal.

# FIG.1

FIG.2

# FIG.3

# FIG.4

| 40 | 41 | 42 | 43 | 44 |
|---|---|---|---|---|
| DERIVEE | FILTRAGE | AMPLIFICATION | DETECTION DE CRETES | COMPARAISON A DEUX SEUILS |

EP 1 655 470 B1

**RÉFÉRENCES CITÉES DANS LA DESCRIPTION**

**Documents brevets cités dans la description**

- US 2003145829 A
- EP 1092968 A
- US 2003010101 A
- US 4928653 A